# EUROPEAN PATENT APPLICATION

(11) **EP 3 413 373 A1**
(43) Date of publication of application: **12.12.2018**
(21) Application number: 17174546.6
(22) Date of filing: 06.06.2017
(51) Int. Cl.: H01M 2/10, B64D 27/24, H01M 2/02, H01M 10/42

(54) **AIRCRAFT BATTERY SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of producing an aircraft battery system, the method comprising: identifying a volume of free space on an aircraft (100); arranging a plurality of electrical power cells (112, 114) such that the plurality of cells (112, 114) are capable of fitting into the identified volume, wherein the arrangement of cells (112, 114) has a non-cuboid shape; fixing the plurality of cells (112, 114) together such that the relative positions of the electrical power cells (112, 114) are maintained; electrically connecting the plurality of cells (112, 114) together, thereby to provide a battery (102, 104); and electrically connecting a DC-to-DC converter (106, 108) to the battery (102, 104), the DC-to-DC converter (106, 108) being configured to control a voltage of the battery (102, 104) to be equal to a specified voltage or within a specified voltage range.

## Description

### FIELD OF THE INVENTION

The present invention relates to aircraft battery systems.

### BACKGROUND

Most modern day aircraft utilize a battery system, which may include one or more batteries, that may be used to power electrical equipment in the aircraft, for example as a back-up system to engine-driven electrical power generators on the aircraft. Typically, batteries of the battery system are recharged by engine-driven electrical power generators.

The batteries of current aircraft battery systems are generally configured in a limited number of different basic designs depending upon the size of the aircraft and the battery manufacturer. In many cases, for a given power requirement, batteries are a given size and shape. Aircraft batteries tend to be cuboid in shape.

The voltage of a battery typically drops as battery charge is depleted.

For many aircraft, it is desirable that the voltage output of batteries on those aircraft adhere to a given aircraft voltage standard of voltage regulation. By way of example, it may be desired or required that the voltage output of an aircraft battery complies with the "28 volt standard", by remaining between 22 volts and 29 volts.

### SUMMARY OF THE INVENTION

The present inventors have realised that aircraft tend to be designed to accommodate batteries having a given size and shape, that given size and shape typically being dependent upon a power requirement of the battery. This tends to be restrictive to the aircraft design process, and may result, for example, in the size and shape of the battery system dictating design of internal structure of the aircraft or limiting locations on the aircraft that are available for battery installation.

The present inventors have realised it would be beneficial to provide a battery system that addresses these problems. The present inventors have realised it would be beneficial to provide a battery system that may be configured to occupy free spaces available on an aircraft having a given design, e.g. a given or predetermined internal structure.

The present inventors have further realised that, for many batteries, it tends to be difficult for those batteries to adhere to given standards for voltage regulation across all environmental conditions that may be experienced on an aircraft. The present inventors have realised that it tends to be possible to use a DC-to-DC converter to regulate or control the voltage of a battery to be a given or specified value or to be within a given or specified range, thereby to meet a given voltage regulation standard.

In a first aspect, the present invention provides a method of producing an aircraft battery system. The method comprises: identifying a volume of free space on an aircraft (e.g. a volume of un-used space on the aircraft, not taken up by, for example, equipment or stores); arranging a plurality of electrical power cells such that the plurality of cells are capable of fitting into the identified volume, wherein the arrangement of cells has a non-cuboid shape; fixing the plurality of cells together such that the relative positions of the electrical power cells are maintained; electrically connecting the plurality of cells together, thereby to provide a battery; and electrically connecting a DC-to-DC converter to the battery, the DC-to-DC converter being configured to control a voltage of the battery to be equal to a specified voltage or within a specified voltage range. The specified voltage or within a specified voltage range may be based on an electrical power requirement of electrical systems (i.e. electrical loads) on the aircraft.

The arrangement of cells may substantially fill the identified volume. The identified volume on the aircraft may be non-cuboid in shape.

The method may further comprise locating the battery in the identified volume on the aircraft. The method may further comprise electrically connecting the battery and the DC-to-DC converter to an electrical system on the aircraft, for example so that electrical power may be supplied (e.g. at the specified voltage or within the specified voltage range) to the electrical system by the battery and the DC-to-DC converter. The method may further comprise the battery and the DC-to-DC converter supplying (e.g. at the specified voltage or within the specified voltage range) electrical power to the electrical system on the aircraft.

In a further aspect, the present invention provides an aircraft battery system for providing electrical power to electrical systems on an aircraft, the aircraft battery system comprising: a battery comprising a plurality of cells electrically connected together, the plurality of cells being arranged and fixed together thereby to provide an arrangement of cells having non-cuboid shape; and a DC-to-DC converter electrically connected to the battery and configured to control a voltage of the battery to be equal to a specified voltage or within a specified voltage range.

The DC-to-DC converter may be configured to actively control the voltage of the battery.

The arrangement of cells has a shape selected from the group of shapes consisting of a triangular prism, a pentagonal-based prism, a hexagonal-based prism, a heptagonal-based prism, an octagonal-based prism, a nonagonal-based prism, a decagonal-based prism, an irregular prism, a parallelepiped, an irregular shape, and a line of connected cells. The cells may be cylindrical cells. The cells may be electrochemical cells. Each cell of the battery may be, for example, in physical contact with at least one other cell of the battery.

The DC-to-DC converter may be configured to control a voltage of the battery to be equal to, or within a specified range of, a voltage value selected from the group of voltage values consisting of 12V, 28V, 48V, 270V, and 540V.

The battery may be a rechargeable battery. The aircraft battery system may further comprise an engine-driven electrical power generator or a ram air turbine driven electrical power generator configured to provide electrical power to charge the battery.

The aircraft battery system may further comprise: a further battery comprising a plurality of further cells electrically connected together, the plurality of further cells being arranged and fixed together thereby to provide an arrangement of further cells having non-cuboid shape; and a further DC-to-DC converter electrically connected to the further battery and configured to control a voltage of the further battery to be equal to the specified voltage or within the specified voltage range. The battery and the further battery may be electrically connected together, e.g., in parallel.

In a further aspect, the present invention provides an aircraft comprising an aircraft battery system according to the preceding aspect. The aircraft includes a non-cuboid volume of space on the aircraft. The battery is located in the non-cuboid volume of space on the aircraft. The aircraft may further comprise an electrical system on the aircraft, the battery and the DC-to-DC converter being electrically connected to the electrical system, for example so that electrical power may be supplied (e.g. at the specified voltage or within the specified voltage range) to the electrical system by the battery and the DC-to-DC converter.

### BRIEF DESCRIPTION OF THE DRAWINGS

Figure 1 is a schematic illustration (not to scale) of an example aircraft on which a battery system is implemented;
Figure 2 is a schematic illustration (not to scale) of a battery of the battery system; and
Figure 3 is a process flow chart showing certain steps of a process of providing the battery on the aircraft.

### DETAILED DESCRIPTION

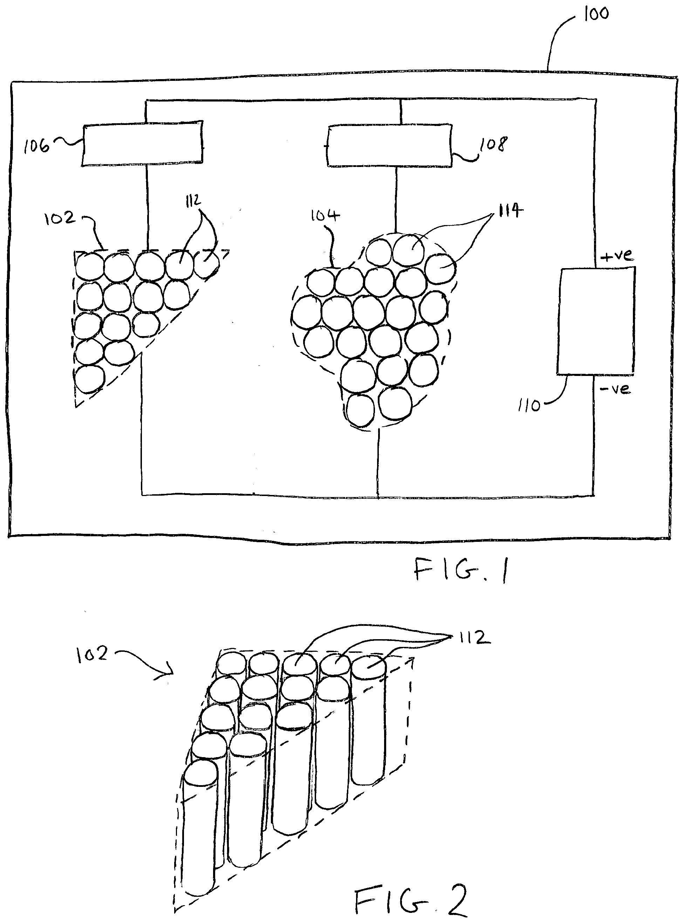

Figure 1 is a schematic illustration (not to scale) of an example aircraft 100 on which an embodiment of a battery system is implemented.

In this embodiment, the aircraft 100 comprises a first battery 102, a second battery 104, a first DC-to-DC converter 106, a second DC-to-DC converter 108, and aircraft electrical systems (which are represented in Figure 1 by a single box and the reference numeral 110).

The first battery 102 comprises a first plurality of electrical power cells, hereinafter referred to as "first cells", some of which are indicated in Figure 1 by the reference numeral 112. As shown in Figures 1 and 2, in this embodiment, the first battery 102 comprises fifteen first cells 112.

The first cells 112 may be any appropriate type of electrical power cell, for example a lithium ion cell. Each first cell 112 may have any appropriate voltage output, for example between about 3V and about 4V, for example about 3.0V, 3.1V, 3.2V, 3.3V, 3.4V, 3.5V, 3.6V, 3.7V, 3.8V, 3.9V, or 4.0V.

Figure 2 is a schematic illustration (not to scale) showing further details of the first battery 102. Figure 2 shows a perspective view of the first battery 102. In this embodiment, each of the first cells 112 is a substantially cylindrical cell, i.e. is approximately a cylinder in shape. The first battery 102 comprises the plurality of first cells 112 arranged to define a non-cuboid shape, which in this embodiment is a triangular prism (i.e. a triangle-based prism), which is indicated in Figure 2 by dotted lines. The base of the triangular prism defined by the first cells 112 of the first battery 102 is indicated in Figure 1 by dotted lines.

The first cells 112 may be attached together, such that their arrangement is fixed, for example by an adhesive or bonding agent, such as a foam or resin that may occupy gaps between the first cells and hold the first cells 112 in their relative positions. Each of the first cells 112 touches, or is contiguous with, at least one other first cell 112.

The first cells 112 of the first battery 102 are electrically connected together in series. Typically, the terminals of the first cells 112 (which may be at the ends of the first cells 112) are attached together, for example, via bolts or by welding. The first cells 112 of the first battery 102 are substantially identical to each other. The first cells 112 of the first battery 102 are electrochemical cells, i.e. devices capable of generating electrical energy from chemical reactions.

Preferably, the first battery 102 is a rechargeable battery that may be charged by, for example, by an engine-driven electrical power generator.

Returning to the description of Figure 1, the first battery 102 is electrically connected in series to the first DC-to-DC converter 106.

In this embodiment, the second battery 104 comprises a second plurality of electrical power cells, hereinafter referred to as "second cells", some of which are indicated in Figure 1 by the reference numeral 114. As shown in Figure 1, in this embodiment, the second battery 104 comprises twenty-one second cells 114.

The second cells 114 may be any appropriate type of electrical power cell, for example a lithium ion cell. Each second cell 114 may have any appropriate voltage output, for example between about 3V and about 4V, for example about 3.0V, 3.1V, 3.2V, 3.3V, 3.4V, 3.5V, 3.6V, 3.7V, 3.8V, 3.9V, or 4.0V.

The plurality of second cells 114 of the second battery 104 are arranged to define an irregular prism (i.e. a prism having an irregular-shaped based). The base of the prism defined by the second cells 114 of the second battery 104 is indicated in Figure 1 by dotted lines.

The second cells 114 may be attached together, such that their arrangement is fixed, for example by an adhesive or bonding agent, such as a foam or resin that may occupy gaps between the first cells and hold the second cells 114 in their relative positions. Each of the second cells 114 touches, or is contiguous with, at least one other second cell 114.

The second cells 114 of the second battery 104 are electrically connected together in series. The second cells 114 of the second battery 104 are substantially identical to each other. The second cells 114 of the second battery 104 are electrochemical cells. The second cells 114 of the second battery 104 may be substantially identical to the first cells 112 of the first battery 102. The cells 112, 114 that are comprised in the batteries 102, 104 may have any appropriate diameters, for example about 30-40mm, 40-50mm, 50-60mm, 60-70mm, or 70-80mm. Preferably, the diameters of the cells 112, 114 are about 50-60mm. The cells 112, 114 that are comprised in the batteries 102, 104 may have any appropriate heights, for example, about 50-100mm, 100-150mm, 150-200mm, or 200-250mm. Preferably, the heights of the cells 112, 114 are about 100-200mm.

Preferably, the second battery 104 is a rechargeable battery that may be charged by, for example, by an engine-driven or ram air turbine (RAT) driven electrical power generator.

The second battery 104 is electrically connected in series to the second DC-to-DC converter 108.

The first and second batteries 102, 104 may be physically spaced apart from each other on the aircraft 100. For example, the first and second batteries 102, 104 may be located at different respective areas of the aircraft 100.

The first DC-to-DC converter 106 is an electronic circuit or electromechanical device that is configured to convert direct current (DC) produced by the first battery 102 from one voltage level to another. In particular, in this embodiment, the first DC-to-DC converter 106 is configured to actively control (i.e. actively adjust) the voltage of the first battery 102 such that the voltage of the first battery 102 is either equal to a specified value or within a specified range of values, which may, for example, be based on any appropriate aerospace voltage standard, such as, but not limited to, nominal 12V (DC), 28V (DC), 48V (DC), 270V (DC), 540V (DC) standards. For example, the first DC-to-DC converter 106 may be configured to actively control the first battery 102 such that the voltage output of the first battery 102 is equal to, or which a predetermined range (e.g. +/- 6V, +/- 5V, +/- 4V, +/- 3V, +/- 2V, or +/- 1V) of, about 14V (DC), about 28V (DC), about 42V (DC), or about 270V (DC). As another example, the first DC-to-DC converter 106 may be configured to actively control the first battery 102 such that the voltage output of the first battery 102 is between about 22V and 29V, or between about 24V and 28V. The first DC-to-DC converter 106 is configured to regulate an output voltage of the first battery 102 to be equal to the specified value or within the specified range of values. The specified value or range for the battery voltage may be based on a voltage regulation requirement which may, for example, be set by a user of the aircraft 100, or a regulatory body.

The first DC-to-DC converter 106 may be any appropriate type of DC-to-DC converter, including but not limited to a switched-mode converter such as a buck-boost converter, boost-buck converter, a boost converter, or a buck converter.

The second DC-to-DC converter 108 is an electronic circuit or electromechanical device that is configured to convert direct current (DC) produced by the second battery 104 from one voltage level to another. In particular, in this embodiment, the second DC-to-DC converter 108 is configured to actively control (i.e. actively adjust) the voltage of the second battery 104 such that the voltage of the second battery 104 is equal to the same specified value or within the same specified range of values as the voltage of the first battery 102. The second DC-to-DC converter 108 is configured to regulate an output voltage of the second battery 104 to be equal to the specified value or within the specified range of values.

The second DC-to-DC converter 108 may be any appropriate type of DC-to-DC converter, including but not limited to a switched-mode converter such as a buck-boost converter, boost-buck converter, a boost converter, or a buck converter. Preferably, the second DC-to-DC converter 108 is the same type of DC-to-DC converter as the first DC-to-DC converter 106.

The terminology "active control" of the voltage of a battery 102, 104 by a DC-to-DC converter 106, 108 may be used herein to refer to voltage control in which a parameter (such as an output voltage of a battery 102, 104, a load on a battery 102, 104, and/or an output of a DC-to-DC converter 106, 108) is measured, and a battery voltage is controlled or adjusted (by a DC-to-DC converter) based on those measurements. The voltage output of a battery is controlled by a DC-to-DC converter by that DC-to-DC converter rapidly switching (e.g. using pulse width modulation, PWM) some or all cells of that battery between being on and being off. In other words, the DC-to-DC converters 106, 108 control the average value of voltage (and current) provided to the aircraft electrical systems 110 by switching the batteries between a supply and load on state and an off state at a fast rate. The longer the batteries are switched on compared to the off periods (i.e. the longer the duty cycle), the higher the total power supplied to the aircraft electrical systems 110. The switching frequency (e.g. the PWM switching frequency) for controlling a battery 102, 104 is determined, based on the measured parameters, to provide that the output voltage of that battery is equal to the specified value or within the specified range of values. The switching frequency (e.g. the PWM switching frequency) for controlling a battery 102, 104 may be varied in operation. Preferably, the switching frequency (e.g. the PWM switching frequency) for the batteries is higher than what would affect the load (i.e. the aircraft electrical systems 110), which is to say that the resultant waveform perceived by the load is as smooth as possible.

Active voltage control may implement logic that controls a DC-to-DC converter 106, 108, thereby controlling battery voltage. Preferably, this control logic is internal control of the DC-to-DC converters 106, 108 (for example, a DC-to-DC converter may comprise a microprocessor for controlling the above described switching based on a set value/range for the battery output voltage). However, it will be appreciated that one or more of the DC-to-DC converters 106, 108 may be controlled by a controller external to the DC-to-DC converter, instead of or in addition to internal logic of that DC-to-DC converter.

Although active control of the batteries 102, 104 by the DC-to-DC converters 106, 108 is preferable, nevertheless, in some embodiments, passive voltage control is implemented.

In this embodiment, the series connected first battery 102 and first DC-to-DC converter 106 are electrically connected in parallel with the series connected second battery 104 and second DC-to-DC converter 108.

The aircraft electrical systems 110 comprise systems on the aircraft 100 that use electrical power. Thus, the aircraft electrical systems 110 are electrical loads on the aircraft 100. Examples of aircraft electrical systems 110 include, but are not limited to, electrical systems associated with an engine of the aircraft 100, electrically operated controls and mechanical devices, flight instrumentation, sensors and controls associated with measuring, displaying, and maintaining flight operational parameters, and lighting.

In this embodiment, aircraft electrical systems 110 are electrically connected in parallel with the series connected first battery 102 and first DC-to-DC converter 106, and also with the series connected second battery 104 and second DC-to-DC converter 108.

In operation, the aircraft electrical systems 110 receive electrical power from the first and second batteries 102, 104. In other words, in use, the aircraft electrical systems 110 draw electrical current from the batteries 102, 104. The current drawn from the batteries 102, 104 by the aircraft electrical systems 110 tends to vary depending factors including, but not limited to, actions being performed by the aircraft electrical systems 110, operations or manoeuvres being performed by the aircraft 100, and environmental conditions (e.g. temperature) in which the aircraft 100 is operating.

In operation, the first and second DC-to-DC converters 106, 108 actively control the voltages across the first and second batteries 102, 104, respectively, to be equal to the specified value or within the specified range of values. In operation, this specified voltage value or range may be varied, for example based on aircraft loadout or other factors. Advantageously, the first and second DC-to-DC converters 106, 108 tend to be capable of actively controlling the voltages across the first and second batteries 102, 104, respectively, to be equal to the specified value or within the specified range of values across all possible or foreseeable current draws by the aircraft electrical systems 110, i.e. across all possible or foreseeable loads. Advantageously, the first and second DC-to-DC converters 106, 108 tend to be capable of actively controlling the voltages across the first and second batteries 102, 104, respectively, to be equal to the specified value or within the specified range of values over all possible or foreseeable environmental conditions (e.g. ambient temperatures of between about -20°C and 85°C) in which the aircraft 100 may operate.

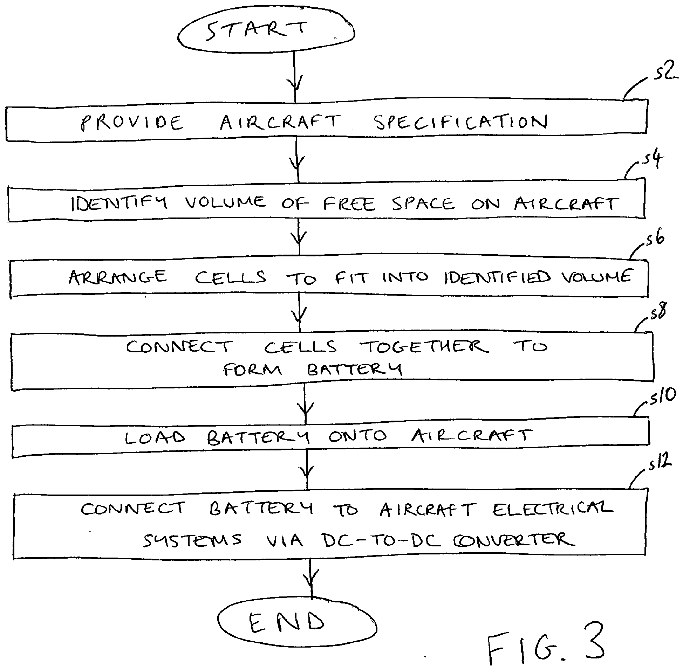

In this embodiment, the shapes of the batteries 102, 104, i.e. the shapes in which the cells 122, 114 are arranged, are defined by free space available on the aircraft 100. In particular, each battery 102, 104 is designed to fit a respective volume of free space available on the aircraft 100. For example, the batteries 102, 104 may be provided as will now be described with reference to Figure 3.

Figure 3 is a process flow chart showing certain steps of a process of providing the first battery 102 on the aircraft 100. It will be appreciated that the second battery 104, and/or other batteries on the aircraft 100, may be provided using an analogous method to that shown in Figure 3 and described in more detail later below.

At step s2, the aircraft 100 (without the first battery), or a design, model, layout, or specification of the aircraft 100 is provided. Thus, in effect, a specification of available space on the aircraft 100 is provided.

At step s4, a volume of free space (i.e. as yet unused or unallocated space) on the aircraft 100 is identified, for example by an aircraft designer with the aid of a computer software tool. This may be done, for example, digitally (e.g. using a digital model of the aircraft 100), using a physical model of the aircraft 100, or using the aircraft 100 itself.

The terminology "free space" on the aircraft may be defined as space that is not occupied, or going to be occupied in use, by other physical items (e.g. aircraft payloads, stores, cargo, equipment, passengers, flight crew).

Generally, the identified volume of free space on the aircraft 100 may have shape and be of a size that can accommodate a plurality of cells. However, in this embodiment, the identified volume of free space on the aircraft 100 is substantially triangular prism shaped, and of a size that can accommodate fifteen cells 122.

At step s6, a plurality of cells (in this embodiment, first cells 112) is arranged such the arrangement of cells fits into the identified volume of free space. Preferably, the plurality of cells is arranged to substantially fill the identified volume of free space, i.e. such that no further cell will fit in the identified volume.

Thus, in this embodiment, fifteen first cells 112 are arranged to define a triangular prism which fits in, and substantially completely fills, the identified triangular prism shaped volume of free space.

The arrangement of cells may be fixed. The plurality of cells may be attached together so that their arrangement is substantially maintained.

At step s8, the first cells 112 are electrically connected together, thereby to form the first battery 102.

At step s10, the first battery 102 is loaded onto the aircraft 100 such that it occupies the identified volume of free space on the aircraft 100.

At step s12, the first battery 102 is electrically connected to an electrical power bus on the aircraft 100 via the first DC-to-DC converter 106, thereby to electrically connect the first battery 102 to the aircraft electrical systems 110.

Thus, a process of providing the first battery 102 on the aircraft 100 is provided.

An advantage provided by the above described methods and apparatus is that one or more batteries that occupy free or previously unused spaces available on the aircraft can be provided, the aircraft having a pre-specified size and shape. Thus, an aircraft design process, which typically includes specifying the size and shape of an aircraft, tends not to be restricted by requiring that the aircraft accommodate batteries having a given size and shape. This tends to be in contrast to certain conventional aircraft design methodologies in which aircraft may be designed to accommodate batteries having given sizes and shapes, which tends to be restrictive to the aircraft design process. Thus, the above described method and apparatus tends to facilitate improvements in aircraft design. Furthermore, advantageously, DC-to-DC converters may be implemented to ensure batteries designed using the above described process adhere to a given standard of voltage regulation.

It should be noted that certain of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the aircraft comprises two batteries, namely the first battery and the second battery. However, in other embodiments the aircraft comprises a different number of batteries, for example only a single battery, or more than two batteries.

In the above embodiments, the aircraft comprises two DC-to-DC converters, namely the first DC-to-DC converter and the second DC-to-DC converter, each of which is electrically coupled to a respective battery. However, in other embodiments the aircraft comprises a different number of DC-to-DC converters, for example only a single DC-to-DC converter, or more than two DC-to-DC converters. Also, in other embodiments, a single DC-to-DC converter is electrically coupled to multiple batteries. Also, in other embodiments, a single battery is coupled to multiple DC-to-DC converters.

In the above embodiments, the first battery comprises fifteen cells and the second battery comprises twenty-one cells. However, in other embodiments, one or more of the batteries comprises a different number of cells. For example, in other embodiments, the first battery comprises less than fifteen cells, or more than fifteen cells. Also, in other embodiments, the second battery comprises less than twenty-one cells, or more than twenty-one cells. Typically, a battery comprises between 5 and 70 cells, although more than 70 cells may be used. The number of cells used in any given battery may be dependent upon power requirements of electrical systems on board the aircraft.

In the above embodiments, the cells of the batteries are cylindrical in shape. Advantageously, cylindrical cells tend to resistant to expansion and contraction, for example caused by varying environmental conditions. However, in other embodiments one or more of the cells of one or more of the batteries is a different appropriate shape. Examples of different shapes for cells include, but are not limited to, cuboid, and so-called "pouch" cells.

In the above embodiments, the cells of the batteries are arranged to define non-cuboid shapes; in particular, the cells of the first battery are arranged to define a triangular prism, and the cells of the second battery are arranged to define an irregular prism. However, in other embodiments, the cells of one or more of the batteries are arranged into a different size and/or shape. Example shapes that may be defined by the cells of a battery include, but are not limited to, prisms having polygonal bases (such as prisms having non-square or non-rectangular bases including but not limited triangular bases, pentagonal bases, hexagonal bases, heptagonal bases, octagonal bases, nonagonal bases, decagonal bases, etc.), prisms having irregular bases, parallelepipeds, irregular shapes, and lines of connected cells.

In the above embodiments, in each battery, the cells of that battery are fixed together, such that their arrangement is fixed, for example by an adhesive or bonding agent. However, in other embodiments, for one or more of the batteries, multiple cells of that battery are fixed together by different means, for example, in a housing made of e.g. plastics.

In the above embodiments, in each battery, each cell of that battery touches or is contiguous with at least one other cell of that battery. However, in other embodiments, multiple cells of one or more of the batteries are spaced apart so that they are not in physical contact, but are electrically connected together.

In the above embodiments, the cells of the batteries are electrically connected together in series. However, in other embodiments, some or all of the cells of one or more of the batteries are connected together in parallel.

In the above embodiments, the cells in each battery are substantially identical to each other. However, in other embodiments, one or more of the batteries includes more than one different type of cell.

In the above embodiments, the cells are electrochemical cells. However, in other embodiments, one or more of the batteries includes one or more different type of cell other than an electrochemical cell, for example an electrostatic storage cell, e.g. a supercapacitor cell.

In the above embodiments, each battery is electrically connected in series to a DC-to-DC converter. However, in other embodiments, one or more of the batteries is electrically connected in parallel to a DC-to-DC converter.

In the above embodiments, the first and second batteries are physically spaced apart from each other on the aircraft. However, in other embodiments multiple batteries are in physical contact with each other on the aircraft.

In the above embodiments, the aircraft electrical systems are electrically connected in parallel with the batteries. However, in other embodiments, some or all of the aircraft electrical systems are electrically connected in series with one or more of the batteries.

## Claims

1. A method of producing an aircraft battery system, the method comprising:
identifying a volume of free space on an aircraft;
arranging a plurality of electrical power cells such that the plurality of cells are capable of fitting into the identified volume, wherein the arrangement of cells has a non-cuboid shape;
fixing the plurality of cells together such that the relative positions of the electrical power cells are maintained;
electrically connecting the plurality of cells together, thereby to provide a battery; and
electrically connecting a DC-to-DC converter to the battery, the DC-to-DC converter being configured to control a voltage of the battery to be equal to a specified voltage or within a specified voltage range.

2. The method according to claim 1, wherein the arrangement of cells substantially fills the identified volume.

3. The method according to claim 1 or 2, further comprising locating the battery in the identified volume on the aircraft, and electrically connecting the battery and the DC-to-DC converter to an electrical system on the aircraft.

4. The method according to any of claims 1 to 3, wherein the identified volume on the aircraft is non-cuboid in shape.

5. An aircraft battery system for providing electrical power to electrical systems on an aircraft, the aircraft battery system comprising:
a battery comprising a plurality of cells electrically connected together, the plurality of cells being arranged and fixed together thereby to provide an arrangement of cells having non-cuboid shape; and
a DC-to-DC converter electrically connected to the battery and configured to control a voltage of the battery to be equal to a specified voltage or within a specified voltage range.

6. The aircraft battery system according to claim 5, wherein the DC-to-DC converter is configured to actively control the voltage of the battery.

7. The aircraft battery system according to claim 5 or 6, wherein the arrangement of cells has a shape selected from the group of shapes consisting of a triangular prism, a pentagonal-based prism, a hexagonal-based prism, a heptagonal-based prism, an octagonal-based prism, a nonagonal-based prism, a decagonal-based prism, an irregular prism, a parallelepiped, an irregular shape, and a line of connected cells.

8. The aircraft battery system according to any of claims 5 to 7, wherein the cells are cylindrical cells.

9. The aircraft battery system according to any of claims 5 to 8, wherein the cells are electrochemical cells.

10. The aircraft battery system according to any of claims 5 to 9, wherein each cell of the battery is in physical contact with at least one other cell of the battery.

11. The aircraft battery system according to any of claims 5 to 10, wherein the DC-to-DC converter is configured to control a voltage of the battery to be equal to, or within a specified range of, a voltage value selected from the group of voltage values consisting of 12V, 28V, 48V, 270V, and 540V.

12. The aircraft battery system according to any of claims 5 to 11, wherein the battery is a rechargeable battery.

13. The aircraft battery system according to any of claims 5 to 12, further comprising an engine-driven electrical power generator or a ram air turbine driven electrical power generator configured to provide electrical power to charge the battery.

14. The aircraft battery system according to any of claims 5 to 13, further comprising:
a further battery comprising a plurality of further cells electrically connected together, the plurality of further cells being arranged and fixed together thereby to provide an arrangement of further cells having non-cuboid shape; and
a further DC-to-DC converter electrically connected to the further battery and configured to control a voltage of the further battery to be equal to the specified voltage or within the specified voltage range; wherein
the battery and the further battery are electrically connected together in parallel.

15. The aircraft comprising an aircraft battery system according to any of claims 5 to 14, wherein
the aircraft includes a non-cuboid volume of space on the aircraft; and
the battery is located in the non-cuboid volume of space on the aircraft.
